# EUROPEAN PATENT SPECIFICATION

(11) **EP 2 730 806 B1**
(45) Date of publication and mention of the grant of the patent: **19.06.2019**
(21) Application number: 13020074.4
(22) Date of filing: 02.08.2013
(51) Int. Cl.: F16H 1/32

(54) **SPEED REDUCING DEVICE**
GESCHWINDIGKEITSVERRINGERUNGSVORRICHTUNG
DISPOSITIF DE RÉDUCTION DE VITESSE

(30) Priority: 31.10.2012 JP 2012241401
(43) Date of publication of application: 14.05.2014
(73) Proprietor: SUMITOMO HEAVY INDUSTRIES, LTD., Tokyo 141-6025 (JP)
(72) Inventor: Yamamoto, Akira, Obu-shi, Aichi, 474-8501 (JP)
(74) Representative: Emde, Eric

(56) References cited:
- EP-A1- 1 666 765
- WO-A1-94/16243
- DE-A1-102008 019 886
- JP-A- 10 110 792
- JP-A- 2001 187 945

## Description

### BACKGROUND OF THE INVENTION

### Field of the Invention

The present invention relates to a speed reducing device.

### Description of Related Art

A speed reducing device provided with an input shaft, a speed reducing mechanism for reducing a rotation of the input shaft, a casing for accommodating the speed reducing mechanism, and an output member disposed on one side of the speed reducing mechanism in an axial direction has been disclosed in JP 10-110792 A.

Usually, this type of speed reducing device is used with a driving source such as a motor disposed on one side thereof in an axial direction, the input shaft thereof connected to a shaft of the driving source, the non-driving source side thereof entirely mounted on a mounting portion of a counterpart machine (host machine: an industrial robot, a machine tool or the like) and the output member thereof connected to a driven member.

However, this type of speed reducing device is used in a state of being mounted on the counterpart machine, as described above. Therefore, with regard to a positional relationship between a power connection portion of the output member of the speed reducing device and the driven member of the counterpart machine, and the mounting portion with respect to the counterpart machine, there is a demand for requiring a long distance between the power connection portion and the mounting portion in some cases, as described in Fig. 3 in JP 10-110792 A, for example. On the contrary, there is also a demand for requiring a short distance therebetween in some cases.

In the related art, when the dimension of a general-purpose speed reducing device designed in advance does not satisfy a required dimension or the like, a dedicated speed reducing device is designed to meet individual needs. Therefore, there is a problem that additional cost or time is required.

### SUMMARY OF THE INVENTION

The invention is to solve the problem in the related art. An object thereof is to provide a speed reducing device having a diversity of mounting with respect to a counterpart machine.

In order to solve the problem described above, the invention provides a speed reducing device including an input shaft, a speed reducing mechanism for decelerating a rotation of the input shaft, a casing for accommodating the speed reducing mechanism, and output members disposed on both axial sides of the speed reducing mechanism. The input shaft is configured to be connected to a shaft of a driving source on any side thereof in the axial direction. Inaddition, the output members disposed on both axial sides are configured to be connected to a driven member of a counterpart machine on any one thereof. Furthermore, a mounting flange with respect to a mounting portion of the counterpart machine is provided at a position away from an axial center portion of the casing. Further, spigot joint portions with respect to the mounting portion of the counterpart machine are formed on both axial sides of the mounting flange on an outer circumference of the casing. Therefore, the mounting flange is configured to be mounted on the mounting portion on any one of both axial sides thereof.

In the invention, first, it is configured that the shaft of the driving source can be connected to any side of the input shaft of the speed reducing mechanism in the axial direction. In addition, a driven member of the counterpart machine can be connected to any one of the output members disposed on both axial sides of the speed reducing mechanism. Therefore, even when the driving source is disposed on any side of the speed reducing device and the counterpart machine is disposed on any side thereof, it is possible to connect the shaft of the driving source to the input shaft of the speed reducing device, and to connect the output member of the speed reducing mechanism to the driven member of the counterpart machine. In other words, even when the arrangement of the driving source and the counterpart machine are not changed, the speed reducing device can be mounted with the "orientation (direction)" of the driving source and counterpart machine sides thereof being rotated 180 degrees.

Under this configuration of the invention, the mounting flange which is connected to the mounting portion of the counterpart machine is provided at a position away from the axial center portion of the casing on the outer circumference of the casing. Therefore, it is possible to change a distance between a power connection portion connected to the driven member of the counterpart machine and the mounting portion of the counterpart machine, by reversing the orientation (direction) of the driving source and mounting portion sides of the speed reducing device. Additionally, it is possible to ensure the diversity of mounting.

According to the invention, it is possible to provide a speed reducing device having a diversity of mounting with respect to a counterpart machine.

### BRIEF DESCRIPTION OF THE DRAWINGS

Fig. 1 is a cross-sectional view showing a configuration of a speed reducing device according to an example of an embodiment of the invention.
Fig. 2 is a cross-sectional view showing a mounting example in which an orientation of the counterpart machine side of the speed reducing device in Fig. 1 is reversed.
Fig. 3 is a cross-sectional view showing an example of another embodiment of the invention.
Fig. 4 is a cross-sectional view showing an example of another embodiment of the invention.

### DETAILED DESCRIPTION OF THE INVENTION

Hereinafter, an example of an embodiment of the invention will be described with reference to accompanying drawings.

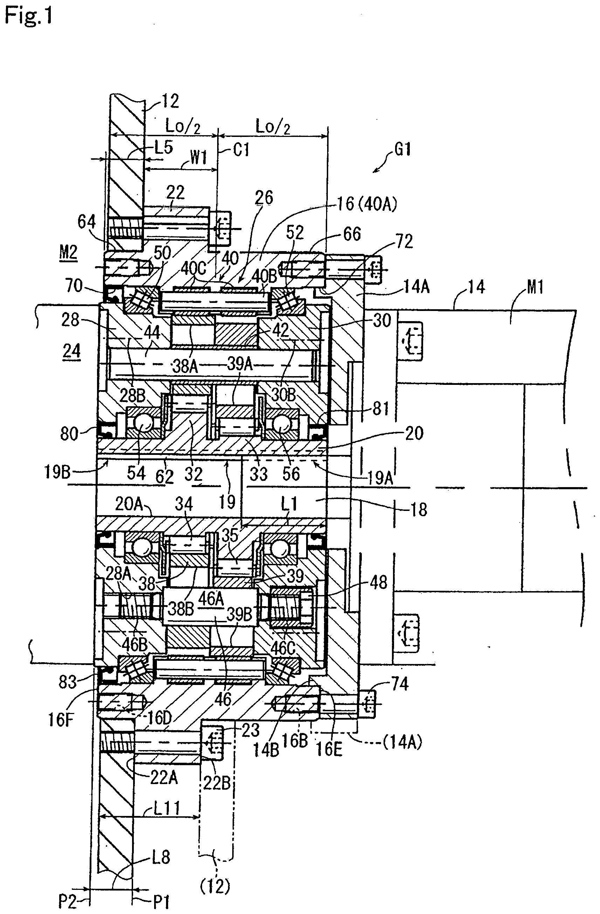

Fig. 1 is a cross-sectional view showing a configuration of a speed reducing device G1 according to an example of an embodiment of the invention.

The speed reducing device G1 is used in a state of being connected to a motor (driving source) M1 and mounted on a mounting portion 12 of a counterpart machine M2 (the whole figure thereof is not shown). Specifically, a casing 14 of the motor M1 is connected to a casing 16 of the speed reducing device G1, and a motor shaft 18 of the motor M1 is connected to an input shaft 20 of the speed reducing device G1. In addition, a mounting flange 22 of the casing 16 of the speed reducing device G1 is mounted on the mounting portion 12 of the counterpart machine M2, and a first carrier body 28 (which is an output member) of the speed reducing device G1 is connected to a driven member 24 of the counterpart machine M2.

The speed reducing device G1 includes the input shaft 20, a speed reducing mechanism 26 for reducing a rotation of the input shaft 20, the casing 16 for accommodating the speed reducing mechanism 26, and first and second carrier bodies 28 and 30 which are output members and disposed on both axial sides of the speed reducing mechanism 26.

The input shaft 20 is a hollow shaft having a hollow portion 20A. A configuration of the input shaft 20 will be described below.

The input shaft 20 has eccentric bodies 32 and 33 as its integral part on an outer circumference thereof and functions as an axis of the eccentric bodies. External gears 38 and 39 are oscillatably installed on an outer circumference of each of the eccentric bodies 32 and 33, via bearings 34 and 35. The external gears 38 and 39 are internally meshed with an internal gear 40. In the embodiment, the internal gear 40 is mainly constituted by an internal gear main body 40A integrally formed with the casing 16, a support pin 40B installed in the internal gear main body 40A, and an outer roller 40C which is rotatably fit into the support pin 40B and constitutes internal teeth of the internal gear 40. The number (which is the number of the outer roller 40C) of the internal teeth of the internal gear 40 is slightly (in the embodiment, the difference is 1) larger than the number of external teeth of the external gears 38 and 39.

Small-diameter through holes 38A and 39A are respectively formed in the external gears 38 and 39. An inner pin 44 covered with an inner roller 42 is loosely fitted with a gap of twice the eccentricity of the eccentric bodies 32 and 33. The inner pin 44 is press-fit into the first and second carrier bodies 28 and 30 (output members) disposed on both axial sides of the speed reducing mechanism 26 (specifically, external gears 38 and 39), whereby the first carrier body 28 is connected to the second carrier body 30.

In addition, large-diameter through holes 38B and 39B are respectively formed in the external gears 38 and 39, and a carrier pin 46 passes the large-diameter through holes in a non-contact state. The carrier pin 46 is provided with a large-diameter portion 46A on the axial center portion thereof, and male screw portions 46B and 46C on both ends thereof. Out of the male screw portion 46B and 46C on both sides of the carrier pin 46, the male screw portion 46B on the counterpart machine M2 side thereof is screwed into a female screw portion 28A of the first carrier body 28 and the male screw portion 46C on the motor M1 side thereof is screwed into a carrier unit 48, thereby connecting the first carrier body 28 and the second carrier body 30 with each other.

A plurality of tap holes 28B and 30B (only center lines thereof are shown in the drawings) are formed in both of the first carrier body 28 and the second carrier body 30. The driven member 24 (the whole figure thereof is not shown) of the counterpart machine M2 is connected to the casing of the speed reducing device by using the tap hole 28B formed in the first carrier body 28.

In addition, the first carrier body 28 and the second carrier body 30 are supported by the casing 16, via a pair of bearings 50 and 52. The input shaft 20 is supported by the first carrier body 28 and the second carrier body 30, via a pair of bearings 54 and 56. Oil seals 80 and 81 are respectively disposed between the first carrier body 28 and the input shaft 20 and between the second carrier body 30 and the input shaft 20.

The speed reducing device G1 is provided with the eccentric-oscillation type speed reducing mechanism 26 configured as above. Therefore, when the input shaft 20 rotates, the external gears 38 and 39 are oscillated and internally meshed with the internal gear 40, via the eccentric bodies 32 and 33 and the ball bearings 34 and 35. Thus, the external gears 38 and 39 are relatively rotated with respect to the internal gear 40 for every rotation of the input shaft 20, by the amount of a difference in the number of teeth therebetween. The relative rotation component is transmitted to the first carrier body 28 and the second carrier body 30, disposed on both axial sides of external gears 38 and 39, respectively, via the inner roller 42 and the inner pin 44. As a result, the driven member 24 of the counterpart machine M2 which is connected to the first carrier body 28 is driven.

Hereinafter, in the speed reducing device G1, a configuration on its connection with the motor M1 or its mounting on the counterpart machine M2 will be described.

As described above, the input shaft 20 of the speed reducing device G1 is a hollow shaft having the hollow portion 20A. A connecting portion 19 to the motor shaft 18 of the motor M1 is formed on an inner circumference of the hollow portion 20A. The connecting portions 19 (connecting portions 19A and 19B) are formed on both axial sides of the input shaft 20 such that the motor shaft 18 can be connected to any side thereof in the axial direction. Particularly, since the connection portions 19A and 19B on both axial sides are formed continuously, the connecting portion 19 is formed in a single part in the embodiment. The embodiment is intended so that the motor shaft can be arbitrarily connected to the input shaft on any side and the processing cost can be reduced even in a case where the motor shaft with any dimension is connected (for example, even in a case where the motor shaft has so long dimension as to be inserted into a point with is equal to or more than half length of the input shaft 20) .

In the embodiment, the connection between the input shaft 20 and the motor shaft 18 is carried out by using a common key 62 no matter what direction the motor shaft 18 is inserted into from. Thereby, the transmission of power is carried out in an axial range L1 in which the input shaft 20 and the motor shaft 18 are superimposed on each other via the key 62.

In the casing 16 which accommodates the speed reducing mechanism 26, spigot joint portions 64 and 66 for mounting the speed reducing device G1 on the mounting portion 12 of the counterpart machine M2 are respectively formed on both axial sides of the outer circumference thereof. Furthermore, the mounting flange 22 with respect to the mounting portion 12 of the counterpart machine M2 is provided at a position away from an axial center portion C1 on the outer circumference of the casing 16. In addition, the axial center portion C1 indicates a position in which a distance from a side end portion of the counterpart machine M2 is Lo/2 when an axial dimension of the casing 16 is Lo. In the embodiment, the mounting flange 22 with respect to the mounting portion 12 is provided at a position away from the axial center portion C1, namely a position which is apart from the side end portion of the counterpart machine by a distance L5. The axial width of the mounting flange 22 is W1.

In the speed reducing device G1, a surface 22A of the mounting flange 22 on the counterpart machine M2 side comes into contact with the mounting portion 12 of the counterpart machine M2 by means of the spigot joint portion 64 on the counterpart machine M2 side on the outer circumference of the casing 16, and mounted on the mounting portion 12 via a bolt 23. The spigot joint portions 64 and 66 are formed on both axial sides of the outer circumference of the casing 16, and the mounting portion 12 of the counterpart machine M2 can be mounted on any one of the surface 22A and a surface 22B on both axial sides of the mounting flange 22.

Furthermore, in both axial end portions of the casing 16, inner-circumferential spigot joints 70 and 72 constituted by an inner-circumferential surfaces are formed in the embodiment. Out of the spigot joints, the inner-circumferential spigot joint 72 on the motor M1 side is used to connect the casing 16 of the speed reducing device G1 to the casing 14 of the motor M1. In other words, a ring-shaped convex portion 14B corresponding to the inner-circumferential spigot joint 72 on the motor M1 side is formed on a flange portion 14A of the casing 14 of the motor M1. The casing 14 of the motor M1 is connected to a bolt hole 16B formed on an end surface 16E of the casing 16 on the motor M1 side, via a bolt 74. In addition, a bolt hole 16D having a similar aspect is formed on an end surface 16F of the casing 16 on the counterpart machine M2 side. Therefore, the casing of the speed reducing device is configured that the motor M1 can be mounted on the end surface 16F side. Furthermore, an oil seal 83 is disposed between the first carrier body 28 and the inner-circumferential spigot joint 70 on the counterpart machine M2 side of the inner-circumferential spigot joints 70 and 72.

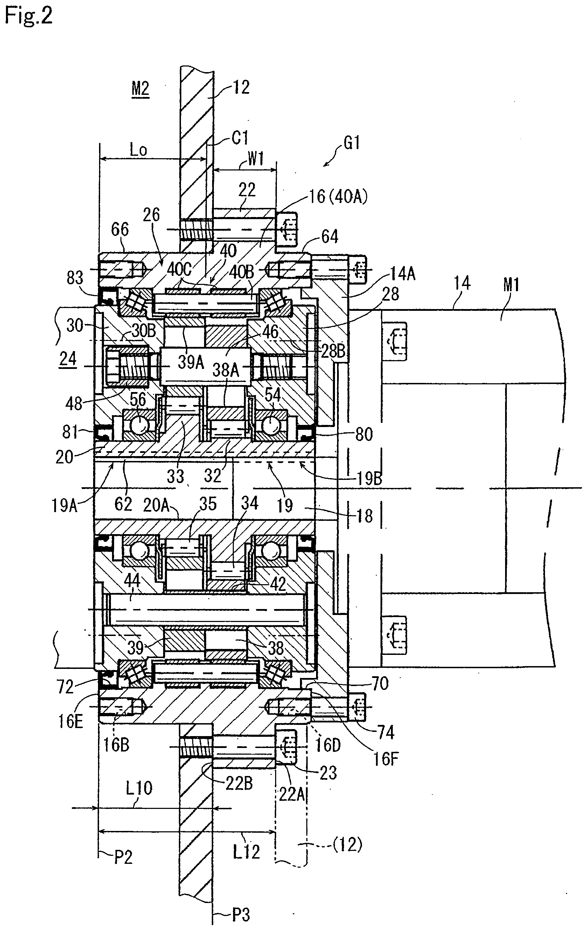

Hereinafter, another mounting example of the speed reducing device G1 (which is the same speed reducing device as in Fig. 1) will be described with reference to Fig. 2, in order to explain the operation of the embodiment and facilitate a better understanding of the configuration of the speed reducing device G1.

In a similar situation, namely a situation in which the motor M1 is positioned on a right side of the paper and the counterpart machine M2 is positioned on a left side thereof, the speed reducing device G1 shown in Figs. 1 and 2 can be mounted with the "orientation (direction) " of the motor M1 and counterpart machine M2 sides of the speed reducing device G1 being rotated 180 degrees.

More specifically, this means that the second carrier body 30 facing the right side (the motor M1 side) of the paper in Fig. 1 is reversed so as to face the left side (the counterpart machine M2 side) of the paper in Fig. 2.

In other words, on the contrary to Fig. 1, the motor M1 is connected to the end surface 16F side of the casing 16, and the surface 22B, which is on an opposite side compared to the case shown in Fig. 1, of the mounting flange 22 of the casing 16 comes into contact with the mounting portion 12 of the counterpart machine M2. The motor shaft 18 is also connected to the input shaft 20 via the connecting portion 19B, which is on an opposite side compared to the case shown in Fig. 1. In addition, the second carrier body 30 (which is positioned on the motor M1 side in Fig. 1) is positioned so as to face the counterpart machine M2. Therefore, the driven member 24 is connected to the second carrier body 30 via the tap hole 30B.

For convenience, the axial position in which the mounting flange 22 of the casing 16 of the speed reducing device G1 is mounted on the mounting portion 12 of the counterpart machine M2 is referred to as a "mounting position", and the axial position in which the transmission of power is carried out between the output member (which is the first or second carrier bodies 28 or 30 or an output unit 82 described below) of the speed reducing device G1 and the driven member 24 of the counterpart machine M2 is referred to as a "power connection position" . The "mounting position" is taken as a middle-point position of the axial range if the mounting is carried out with an axial width. Also, the "power connection position" is taken as a middle-point position of the axial range if the mounting is carried out with an axial width.

In this case, when the mounting aspect is the same as the aspect shown in Fig. 1, the mounting position is "P1" and the power connection position is "P2". When the distance between the mounting position P1 and the power connection position P2 is designated as a "mounting distance", the mounting distance is "L8".

On the other hand, when the mounting aspect is the same as the aspect shown in Fig. 2, the mounting position is "P3". However, the power connection position is the same "P2" as the position in Fig. 1 and the mounting distance becomes L10. That is, in the example of Fig. 2, it is realized that a mounting distance L10 is as longer than the mounting distance L8 in Fig. 1 as the mounting position is shifted to the P3 from the P1 in the example of Fig. 1 (L8<L10).

That means that two kinds of casings of the speed reducing device are practically designed. Therefore, it is possible to further improve the diversity of mounting.

Furthermore, the input shaft 20 is a hollow shaft having the hollow portion 20A, in the embodiment. In addition, the connecting portion 19 to the motor shaft 18 of the motor M1 is formed on the inner circumference of the hollow portion 20A. Therefore, it is easy to be able to realize a configuration in which the motor shaft 18 can be connected to any side thereof.

In addition, the connecting portions 19 (19A, 19B) of the input shaft 20 and the motor shaft 18 are formed on both axial sides of the input shaft 20, and the connecting portions 19A and 19B on both axial sides are formed continuously. Therefore, even when the axial range (entering length) L1 of the motor shaft 18 in the input shaft 20 is equal to or more than half length of the input shaft 20, for example, and the motor shaft 18 is inserted from any side of the input shaft 20, it is possible to connect the motor shaft 18 to the input shaft 20 without any problem. It is also easy to process the input shaft (low cost) .

Furthermore, the tap holes 28B and 30B are respectively formed on both output members (the first carrier body 28 and the second carrier body 30) disposed on both axial sides. Therefore, even in the case where any side of the speed reducing device G1 is positioned to face the counterpart machine M2 side, it can be usually and simply connected to the driven member 24 of the counterpart machine M2, without any additional processing.

In addition, depending on the configuration of the counterpart machine M2, there are cases where the surface (surface 22B in Fig. 1 and surface 22A in Fig. 2) of the mounting flange 22 on the motor M1 side can come into contact with and be mounted on the mounting portion (12) of the counterpart machine M2. In this case, the surface of the mounting flange 22 on the motor M1 side (the surface 22B in Fig. 1 and the surface 22A in Fig. 2) may become a contacting surface and be mounted on the mounting portion (12) of the counterpart machine M2, as shown by an imaginary line in Figs. 1 and 2. In this case, additional mounting aspects where a mounting distance is L11 in the mounting example of Fig. 1 and a mounting distance is L12 in the mounting example of Fig. 2 can be obtained. Therefore, the speed reducing device G1 can be mounted on the mounting portion (12) of the counterpart machine M2 in four kinds of mounting aspects in total, while using the same speed reducing device G1.

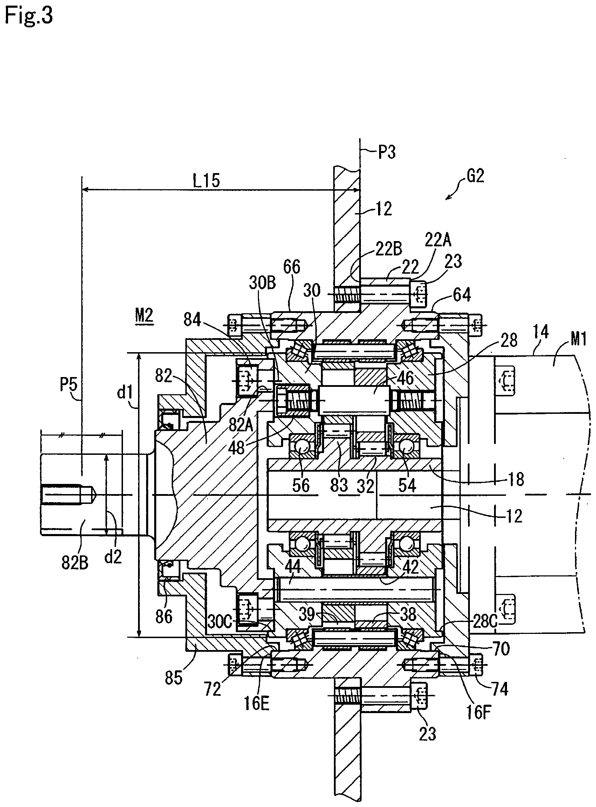

Fig. 3 shows an example of another embodiment of the invention.

A speed reducing device G2 according to this embodiment is based on the mounting aspect shown in Fig. 2 and made by further improving the mounting aspect. Therefore, the same or functionally same members or parts as in Fig. 2 are given the same reference numerals as in Fig. 2 and, basically, have the same effects as in Fig. 2.

In the speed reducing device G2 of Fig. 3, the output unit 82 provided with an output shaft (output portion) 82B having an outer diameter d2 smaller than an outer diameter d1 of the second carrier body 30 is connected to the tap hole 30B of the second carrier body 30. Specifically, the output unit 82 has a through hole 82A at a position corresponding to the tap hole 30B. The output unit 82 is connected to the second carrier body 30 by a bolt 84, using an inner spigot joint 30C formed on the second carrier body 30. Furthermore, in the example shown in Fig. 3, a similar inner spigot joint 28C is also formed on the first carrier body 28. Therefore, the output unit 82 can be mounted on the first carrier body 28 side.

In the example shown in Fig. 3, the power connection position is P5, and the mounting position is the same P3 as in Fig. 2. Therefore, an additional mounting aspect where a mounting distance is L15 can be newly obtained. Thus, it is possible to further improve the diversity of mounting with respect to the counterpart machine M2. In addition, it is possible to more improve the diversity with a very simple structure, by preparing several types of output unit 82 having a different outer diameter or an axial length.

Furthermore, in the embodiment shown in Fig. 3, a cover body 85 (not the oil seal 83) is connected to the inner-circumferential spigot joint 72 facing the counterpart machine M2 side of the inner-circumferential spigot joints 70 and 72 similar to those in the embodiment described above. In addition, instead of the oil seal 83, an oil seal 86 (not disposed in the inner-circumferential spigot joint 72) is disposed between the inner circumference of the cover body 85 and the output shaft 82B of the output unit 82. Thus, since an oil seal having a diameter smaller than that of the oil seal 83 shown in Figs. 1 and 2 can be used as the oil seal 86, it is possible to maintain a better sealing characteristic for a long period.

Furthermore, the cover body 85 and the oil seal 86 may not be provided. For example, it may be configured that (the oil seal 83 is provided in the inner-circumferential spigot joint 72 in a state where the cover body 85 is not mounted, as shown in the above-described embodiment of Fig.2.) only the output unit 82 is connected to the second carrier body 30. On the contrary, several groups of the cover body 85, the oil seal 86 and the output unit 82 may be prepared. In this case, it is possible to further improve the diversity thereof.

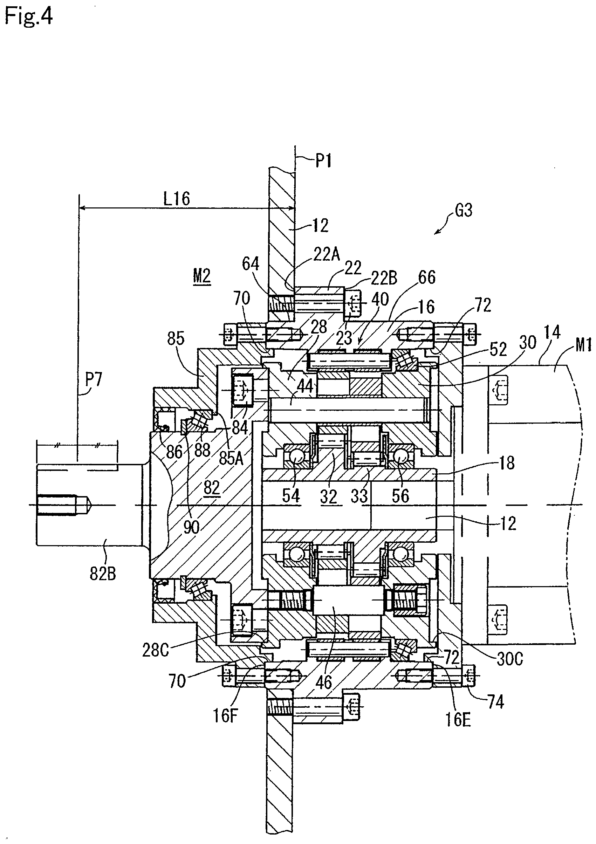

In addition, when the output unit 82 described above or the like is disposed on the counterpart machine M2 side, it may be configured that the oil seal 86 and a bearing 88 are arranged along the axial direction on the inner circumference of the cover body 85, as shown in Fig. 4.

A speed reducing device G3 according to an embodiment shown in Fig. 4 is based on the mounting structure of the speed reducing device G1 shown in Fig. 2. Also, the speed reducing device G3 adopts a mounting aspect in which the output is taken out from the first carrier body 28. Therefore, the same reference numerals as in Fig. 2 are given to the same or functionally same members as shown in Fig. 2.

A retaining ring 90 for retaining the bearing 88 is disposed on the output unit 82. In the cover body 85, a protrusion portion 85A (for retaining the bearing 88) is provided at a position where the oil seal 86 and the bearing 88 can be arranged in a row. Furthermore, the bearing 52 is disposed on the opposite side (on the motor M1 side) between the casing 16 and the second carrier body 30, as in the embodiment described above.

According to the configuration shown in Fig. 4, the power connection position is P7 and the mounting position is the same P1 as in Fig. 1. Therefore, L16 is obtained as the mounting distance thereof. In addition, the output unit 82, the first carrier body 28, the inner pin 44, the carrier pin 46 and the second carrier body 30 constitute a large integral "output block" . The output block is supported by the bearing 88 disposed adjacent to the oil seal 86 and the bearing 52 on the outer circumference of the second carrier body 30. According to this configuration, aside from the oil seal 86, a bearing having a smaller diameter than the bearing (50) can be used as the bearing 88, instead of the bearing (50) on the outer circumference of the first carrier body 28. Therefore, it is possible to further reduce the cost. In addition, since a large bearing span is ensured, a stable support can be achieved.

The other configurations in Figs. 3 and 4 are the same as the embodiments shown in Figs. 1 and 2 described above . Therefore, the same reference numerals as in Figs. 1 and 2 are given to the same or functionally similar to parts as shown in Figs. 3 and 4. Also, the redundant descriptions will be omitted.

In addition, in the embodiments described above, a hollow shaft having the hollow portion 20A is adopted as the input shaft 20, and the connecting portion 19 to the motor shaft 18 of the motor M1 are formed on the inner circumference of the hollow portion 20A. However, in the invention, the configuration of the input shaft and the connecting structure of the input shaft and the shaft of the driving source are not limited to the embodiments. For example, the input shaft may be a solid shaft, and its connection to the motor shaft may be carried out by connecting a gear provided on an outer circumference of the solid input shaft to a pinion provided on the motor shaft. Alternatively, it may be configured that a nut-type internal teeth pinion having internal teeth on an inner circumference thereof is connected to the motor shaft, and then is connected to an external teeth gear provided on an outer circumference of the solid input shaft in the manner of constant velocity joining.

Furthermore, in the embodiments described above, the connecting portions 19 with regard to the motor shaft 18 are formed on both sides of the input shaft 20 in the axial direction (19A, 19B), and the connecting portions 19A and 19B on both axial sides are formed continuously. Thereby, the flexibility and the ease of processing of the input shaft 20 are ensured with respect to the axial range L1 (entering length) of the input shaft 20 where the motor shaft 18 is inserted into. However, the connecting portion in the invention may not necessarily be formed in such a configuration. For example, the connecting portion 19 may be cut at the axial center portion, or may not be formed on the entire length of the input shaft 20 but only on the axial center portion thereof. In other words, the connecting portion may not necessarily be formed continuously. The connection therebetween may be made using a key, or, for example, a spline or a clamp.

In addition, in the embodiments described above, the tap holes 28B and 30B are respectively formed on the first carrier body 28 and the second carrier body 30. However, the tap holes may not be formed on the output members on both sides . For example, in a state where the tap hole is formed only on the output member on one side in advance, the tap hole may be formed, at a worksite, on the output member on the other side if the connection is carried out on the other side. Alternately, none of the tap holes may be formed on the output members in advance, and the tap holes may be formed for the first time when the positional relationship with respect to the counterpart machine is confirmed. When the tap hole is formed according to the situation in such a manner, it is possible not only to reduce the processing cost but also to further increase the strength because an unnecessary tap hole is not formed. The point is that a configuration can be made to connect to the counterpart machine. In this case, if a configuration can be made to form a tap hole, the required matter is satisfied.

Furthermore, in the embodiments described above, the inner-circumferential spigot joints 70 and 72 are formed on both end portions of the casing 16 in the axial direction by the inner circumferential surface thereof, and one of the inner-circumferential spigot joints 70 and 72 is used to connect the casing 16 to the casing 14 of the motor M1. However, the inner-circumferential spigot joints 70 and 72 may not necessarily be formed. When the inner-circumferential spigot joints 70 and 72 are not formed, the connection of the casing 16 to the motor M1 may be carried using the spigot joint portion 66 on the outer circumference of the casing 16 which is on a side opposite to the counterpart machine M2 side, as shown by a flange portion 14A of the imaginary line in Fig. 1.

In addition, in the embodiments described above, the oil seal 80 is disposed on the inner-circumferential spigot joint 70 on the counterpart machine M2 side of the inner-circumferential spigot joints 70 and 72. However, the oil seal may not necessarily be disposed at the position corresponding to the inner-circumferential spigot joint, as shown in Figs. 3 and 4.

Furthermore, the members (the output unit 82, the cover body 85, the oil seal 86 or the bearing 88) such as the output unit 82 included in the embodiments shown in Figs. 3 and 4 may not necessarily be essential. For example, it may be configured as the embodiments shown in Figs. 1 and 2, as described previously.

In addition, in the embodiments described above, the eccentric-oscillation type speed reducing mechanism 26 having the eccentric shaft (input shaft 20) provided with the eccentric bodies 32 and 33 which is positioned at the radial center portion of the speed reducing mechanism 26 is adopted as a speed reducing mechanism. However, the invention can be applied to an eccentric-oscillation type speed reducing mechanism in which the rotation of the input shaft provided on the radial center portion of the speed reducing mechanism is transmitted to a plurality of eccentric shafts disposed at positions which are offset from the radial center, for example. Further, without being limited to such an eccentric-oscillation type speed reducing mechanism, the invention can be applied to a speed reducing device having a simple planetary-gear speed reducing mechanism, as well. Still further, the invention also can be applied to a speed reducing device provided with a speed reducing mechanism aside from those described above and can achieve the same operational effects, as long as the speed reducing device is provided with, on the whole, an input shaft, a speed reducing mechanism for reducing the rotation of the input shaft, a casing for accommodating the speed reducing mechanism, output members disposed on both axial sides of the speed reducing mechanism.

## Claims

1. A speed reducing device (G1, G2, G3) comprising:
an input shaft (20);
a speed reducing mechanism (26) for reducing a rotation of the input shaft (20);
acasing (16) for accommodating the speed reducing mechanism (26); and
output members (28, 30) disposed on both axial sides of the speed reducing mechanism (26),
wherein the input shaft (20) is configured to be connected to a shaft (18) of a driving source (M1) on any side thereof in the axial direction,
wherein the output members (28, 30) disposed on both axial sides are configured that a driven member (24) of a counterpart machine (M2) can be connected to any one thereof,
wherein a mounting flange (22) with respect to a mounting portion (12) of the counterpart machine (M2) is provided at a position away from an axial center portion (C1) of the casing (16),
wherein, in the mounting flange (22) of an outer circumference of the casing (16), spigot joint portions (64, 66) with respect to the mounting portion (12) of the counterpart machine (M2) are formed on both axial sides thereof, and
wherein the mounting flange (22) is configured to be mounted on the mounting portion (12) on any one of both axial sides thereof .

2. The speed reducing device (G1, G2, G3) according to Claim 1,
wherein the input shaft (20) is a hollow shaft having a hollow portion (20A), and
wherein a connecting portion (19) to the shaft (18) of the driving source (M1) is formed on an inner circumference of the hollow portion (20A).

3. The speed reducing device (G1, G2, G3) according to Claim 2,
wherein connecting portions (19) with respect to the shaft (18) of the driving source (M1) are formed on both axial sides of the input shaft (20), and
wherein engaging portions (19A, 19B) of the connection portions (19) on both axial sides of the input shaft (20) are continuously formed.

4. The speed reducing device (G1, G2, G3) according to any one of Claims 1 to 3,
wherein tap holes (28B, 30B) are formed on any output members (28, 30) disposed on both axial sides.

5. The speed reducing device (G1, G2, G3) according to any one of Claims 1 to 4,
wherein inner-circumferential spigot joints (70, 72) are formed on inner circumferences of both axial end portions of the casing (16), and one of the inner-circumferential spigot joints (70, 72) is used as a spigot joint for the connection to the driving source (M1).

6. The speed reducing device (G1, G2, G3) according to Claim 5,
wherein, an oil seal (80) is disposed on the inner-circumferential spigot joint (70) facing the counterpart machine (M2) side of the inner-circumferential spigot joints (70, 72) .

7. The speed reducing device (G1, G2, G3) according to any one of Claims 1 to 6,
wherein an output unit (82) having an output portion (82B) of which an outer diameter (d2) is smaller than that (d1) of the output member (30) is connected to the output member (30) on the counterpart machine (M2) side in the axial direction of the output members (28, 30).

8. The speed reducing device (G1, G2, G3) according to Claim 5, wherein an output unit (82) having an output portion (82B) of which an outer diameter (d2) is smaller than that (d1) of the output member (30) is connected to the output member (30) facing the counterpart machine (M2) side in the axial direction of the output members (28, 30),
wherein a cover body (85) is connected to the inner-circumferential spigot joint (72) on the counterpart machine (M2) side of the inner-circumferential spigot joints (70, 72), and
wherein an oil seal (86) is disposed between an inner circumference of the cover body (85) and the output portion (82B) .

9. The speed reducing device (G1, G2, G3) according to Claim 8,
wherein a bearing (88) and the oil seal (86) are arranged along the axial direction on the inner circumference of the cover body (85), and
wherein, on the output member (30) on the driving source (M1) side, a further bearing (52) is disposed between the output member (30) and the casing (16).

10. The speed reducing device (G1, G2, G3) according to any one of Claims 1 to 9,
wherein a spigot joint (64, 66) on the outer circumference of the casing (16) which is on a side opposite to the side facing the counterpart machine (M2) side is used as a spigot joint for the connection to the driving source (M1).

## Patentansprüche

1. Drehzahlverringerungs- bzw. Untersetzungsvorrichtung (G1, G2, G3), die Folgendes aufweist:
eine Eingangswelle (20);
einen Drehzahlverringerungs- bzw. Untersetzungsmechanismus (26) zur Verringerung einer Rotation der Eingangswelle (20);
ein Gehäuse (16) zur Unterbringung des Untersetzungsmechanismus (26); und
Ausgabeglieder (28, 30), die auf beiden axialen Seiten des Untersetzungsmechanismus (26) angeordnet sind,
wobei die Eingangswelle (20) so konfiguriert ist, dass sie mit einer Welle (18) einer Antriebsquelle (M1) auf irgendeiner Seite von dieser in der axialen Richtung verbunden wird,
wobei die Ausgabeglieder (28, 30), die auf beiden axialen Seiten angeordnet sind, so konfiguriert sind, dass ein angetriebenes Glied (24) einer Gegenstückmaschine (M2) mit irgendeinem von diesen verbunden werden kann,
wobei ein Anbringungsflansch (22) in Bezug auf einen Anbringungsteil (12) der Gegenstückmaschine (M2) bei einer Position entfernt von einem axialen Mittelteil (C1) des Gehäuses (16) vorgesehen ist,
wobei in dem Anbringungsflansch (22) eines Außenumfangs des Gehäuses (16) Rohrsteckverbindungsteile (64, 66) in Bezug auf den Anbringungsteil (12) der Gegenstückmaschine (M2) auf beiden axialen Seiten von diesem gebildet sind, und
wobei der Anbringungsflansch (22) so konfiguriert ist, dass er an dem Anbringungsteil (12) auf irgendeiner der beiden axialen Seiten von diesem angebracht wird.

2. Untersetzungsvorrichtung (G1, G2, G3) gemäß Anspruch 1,
wobei die Eingangswelle (20) eine Hohlwelle mit einem hohlen Teil (20A) ist, und
wobei ein Verbindungsteil (19) an der Welle (18) der Antriebsquelle (M1) an einem Innenumfang des hohlen Teils (20A) gebildet ist.

3. Untersetzungsvorrichtung (G1, G2, G3) gemäß Anspruch 2,
wobei die Verbindungsteile (19) in Bezug auf die Welle (18) der Antriebsquelle (M1) auf beiden axialen Seiten der Eingangswelle (20) gebildet sind, und wobei die Eingriffsteile (19A, 19B) der Verbindungsteile (19) auf beiden axialen Seiten der Eingangswelle (20) kontinuierlich gebildet sind.

4. Untersetzungsvorrichtung (G1, G2, G3) gemäß einem der Ansprüche 1 bis 3, wobei Gewindebohrungen (28B, 30B) auf sämtlichen Ausgangsgliedern (28, 30) gebildet sind, die auf beiden axialen Seiten angeordnet sind.

5. Untersetzungsvorrichtung (G1, G2, G3) gemäß einem der Ansprüche 1 bis 4, wobei Innenumfangsrohrsteckverbindungen (70, 72) auf Innenumfängen beider axialer Endteile des Gehäuses (16) gebildet sind, und eine der Innenumfangsrohrsteckverbindungen (70, 72) als eine Rohrsteckverbindung für die Verbindung mit der Antriebsquelle (M1) verwendet wird.

6. Untersetzungsvorrichtung (G1, G2, G3) gemäß einem der Ansprüche 1 bis 5, wobei eine Öldichtung (80) auf der Innenumfangsrohrsteckverbindung (70) angeordnet ist, die zu der Seite der Gegenstückmaschine (M2) der Innenumfangsrohrsteckverbindungen (70, 72) weist.

7. Untersetzungsvorrichtung (G1, G2, G3) gemäß einem der Ansprüche 1 bis 6, wobei eine Ausgangseinheit (82) mit einem Ausgangsteil (82B), dessen Außendurchmesser (d2) kleiner als der (d1) des Ausgangsglieds (30) ist, mit dem Ausgangsglied (30) der Seite der Gegenstückmaschine (M2) in der axialen Richtung der Ausgangsglieder (28, 30) verbunden ist.

8. Untersetzungsvorrichtung (G1, G2, G3) gemäß Anspruch 5,
wobei eine Ausgangseinheit (82), die einen Ausgangsteil (82B) aufweist, dessen Außendurchmesser (d2) kleiner als der (d1) des Ausgangsglieds (30) ist, mit dem Ausgangsglied (30), das zu der Seite der Gegenstückmaschine (M2) weist, in der axialen Richtung des Ausgangsglieds (28, 30) verbunden ist,
wobei ein Abdeckungskörper (85) mit der Innenumfangsrohrsteckverbindung (72) auf der Seite der Gegenstückmaschine (M2) der Innenumfangsrohrsteckverbindungen (70, 72) verbunden ist, und
wobei eine Öldichtung (86) zwischen einem Innenumfang des Abdeckungskörpers (85) und dem Ausgangsteil (82B) angeordnet ist.

9. Untersetzungsvorrichtung (G1, G2, G3) gemäß Anspruch 8,
wobei ein Lager (88) und die Öldichtung (86) entlang der axialen Richtung auf dem Innenumfang des Abdeckungskörpers (85) angeordnet sind, und wobei auf dem Ausgangsglied (30) auf der Seite der Antriebsquelle (M1) ein weiteres Lager (52) zwischen dem Ausgangsglied (30) und dem Gehäuse (16) angeordnet ist.

10. Untersetzungsvorrichtung (G1, G2, G3) gemäß einem der Ansprüche 1 bis 9, wobei eine Rohrsteckverbindung (64, 66) auf dem Außenumfang des Gehäuses (16), das auf einer Seite gegenüberliegend der Seite ist, die zu der Seite der Gegenstückmaschine (M2) weist, als eine Rohrsteckverbindung für die Verbindung mit der Antriebsquelle (M1) verwendet wird.

## Revendications

1. Dispositif de réduction de vitesse (G1, G2, G3) comprenant :
un arbre d'entrée (20) ;
un mécanisme de réduction de vitesse (26) pour réduire la rotation de l'arbre d'entrée (20) ;
un carter (16) pour loger le mécanisme de réduction de vitesse (26) ; et
des éléments de sortie (28, 30) disposés sur les deux côtés axiaux du mécanisme de réduction de vitesse (26),
dans lequel l'arbre d'entrée (20) est agencé pour être connecté à un arbre (18) d'une source motrice (M1) sur n'importe quel côté de celui-ci dans la direction axiale,
dans lequel les éléments de sortie (28, 30) disposés sur les deux côtés axiaux sont agencés de telle sorte qu'un élément entrainé (24) d'une machine homologue (M2) peut être connecté à l'un quelconque d'entre eux,
dans lequel un rebord de montage (22) par rapport à une portion de montage (12) de la machine homologue (M2) est prévu au niveau d'une position éloignée d'une portion centrale axiale (C1) du carter (16),
dans lequel, dans le rebord de montage (22) d'une circonférence extérieure du carter (16), des portions de raccord à emboitement (64, 66) par rapport à la portion de montage (12) de la machine homologue (M2) sont formés sur les deux côtés axiaux de celui-ci, et
dans lequel le rebord de montage (22) est agencé pour être monté sur la portion de montage (12) sur l'un quelconque des deux côtés axiaux de celle-ci.

2. Dispositif de réduction de vitesse (G1, G2, G3) selon la revendication 1,
dans lequel l'arbre d'entrée (20) est un arbre creux comportant une portion creuse (20A), et
dans lequel une portion de connexion (19) à l'arbre (18) de la source motrice (M1) est formée sur une circonférence intérieure de la portion creuse (20A).

3. Dispositif de réduction de vitesse (G1, G2, G3) selon la revendication 2,
dans lequel des portions de connexion (19) par rapport à l'arbre (18) de la source motrice (M1) sont formées sur les deux côtés axiaux de l'arbre d'entrée (20), et
dans lequel des portions de mise en prise (19A, 19B) des portions de connexion (19) sur les deux côtés axiaux de l'arbre d'entrée (20) sont formées de manière continue.

4. Dispositif de réduction de vitesse (G1, G2, G3) selon l'une quelconque des revendications 1 à 3,
dans lequel des trous de coulée (28B, 30B) sont formés sur tous les éléments de sortie (28, 30) disposés sur les deux côtés axiaux.

5. Dispositif de réduction de vitesse (G1, G2, G3) selon l'une quelconque des revendications 1 à 4,
dans lequel des raccords à emboitement de circonférence intérieure (70, 72) sont formés sur des circonférences intérieures des deux portions d'extrémité axiales du carter (16), et l'un des raccords à emboitement de circonférence intérieure (70, 72) est utilisé comme raccord à emboitement pour la connexion à la source motrice (M1).

6. Dispositif de réduction de vitesse (G1, G2, G3) selon la revendication 5,
dans lequel un joint d'huile (80) est disposé sur le raccord à emboitement de circonférence intérieure (70) orienté vers le côté de la machine homologue (M2) des raccords à emboitement de circonférence intérieure (70, 72).

7. Dispositif de réduction de vitesse (G1, G2, G3) selon l'une quelconque des revendications 1 à 6,
dans lequel un module de sortie (82) comportant une portion de sortie (82B) dont un diamètre extérieur (d2) est inférieur à celui (d1) de l'élément de sortie (30) est connecté à l'élément de sortie (30) sur le côté de la machine homologue (M2) dans la direction axiale des éléments de sortie (28, 30).

8. Dispositif de réduction de vitesse (G1, G2, G3) selon la revendications 5,
dans lequel un module de sortie (82) comportant une portion de sortie (82B) dont un diamètre extérieur (d2) est inférieur à celui (d1) de l'élément de sortie (30) est connecté à l'élément de sortie (30) orienté vers le côté de la machine homologue (M2) dans la direction axiale des éléments de sortie (28, 30),
dans lequel un corps de couvercle (85) est connecté au raccord à emboitement de circonférence intérieure (72) sur le côté de la machine homologue (M2) des raccords à emboitement de circonférence intérieure (70, 72), et
dans lequel un joint d'huile (86) est disposé entre une circonférence intérieure du corps de couvercle (85) et la portion de sortie (82B).

9. Dispositif de réduction de vitesse (G1, G2, G3) selon la revendications 8,
dans lequel un roulement (88) et le joint d'huile (86) sont agencés suivant la direction axiale sur la circonférence intérieure du corps de couvercle (85), et
dans lequel, sur l'élément de sortie (30) sur le côté de la source motrice (M1), un autre roulement (52) est disposé entre l'élément de sortie (30) et le boîtier (16).

10. Dispositif de réduction de vitesse (G1, G2, G3) selon l'une quelconque des revendications 1 à 9,
dans lequel un raccord à emboitement (64, 66) sur la circonférence extérieure du carter (16) qui est sur un côté opposé au côté orienté vers le côté de la machine homologue (M2) est utilisé comme raccord à emboitement pour la connexion à la source motrice (M1).
